# FASCICULE DE BREVET EUROPEEN

(11) **EP 1 252 107 B1**
(45) Date de publication et mention de la délivrance du brevet: **18.02.2004**
(21) Numéro de dépôt: 00978981.9
(22) Date de dépôt: 09.11.2000
(51) Int. Cl.: C02F 3/34

(54) **PROCEDE DE TRAITEMENT BACTERIEN D'EFFLUENTS CONTENANT AU MOINS UN ETHER PAR GORDONIA TERRAE CIP I-2194**
VERFAHREN ZUR BAKTERIELLEN BEHANDLUNG VON ETHER ENTHALTENDEM ABWASSER MITTELS GORDONA TERRAE CIP I-2194
METHOD FOR TREATING BACTERIAL EFFLUENTS CONTAINING AT LEAST A GORDONIA TERRAE CIP I-2194 ETHER

(30) Priorité: 09.11.1999 FR 9914211
(43) Date de publication de la demande: 30.10.2002
(73) Titulaire: Institut Français du Pétrole, 92852 Rueil-Malmaison Cedex (FR)
(72) Inventeur: HERNANDEZ, Guillermina, F-31000 Toulouse (FR); FRANCOIS, Alan, F-95230 Soisy S/ Montmorency (FR); PIVETEAU, Pascal, F-21000 Dijon (FR); FAYOLLE, Françoise, F-92140 Clamart (FR); MONOT, Frédéric, F-92000 Nanterre (FR)
(86) Numéro de dépôt international: PCT/FR2000/003113
(87) Numéro de publication internationale: WO 2001/034528

(56) Documents cités:
- FR-A- 2 766 478
- FAYOLLE ET AL: "Isolation of two aerobic bacterial strains that degrade efficiently ethyl t-butyl ether (ETBE)" BIOTECHNOLOGY LETTERS,GB,KEW, SURREY, vol. 20, no. 3, mars 1998 (1998-03), pages 283-286-286, XP002115642 ISSN: 0141-5492

## Description

L'invention concerne un procédé de traitement bactérien par des micro-organismes capables de dégrader au moins un éther, notamment l'éthyl *tertio*-butyl éther (ETBE) et/ou le méthyl *tertio*-butyl éther (MTBE) et/ou le *tertio*-amyl méthyl éther (TAME) contenus dans des effluents aqueux.
Elle s'applique particulièrement à l'industrie du traitement de l'eau.
Il est connu que le méthyl-*tertio*-butyl éther, désigné ci-après sous le terme de MTBE, ainsi que le *tertio*-amyl méthyl éther, désigné ci-après sous le terme de TAME, sont des éthers qui peuvent être utilisés notamment comme additifs oxygénés dans les essences sans plomb dans le but d'augmenter leur indice d'octane. L'utilisation croissante d'additifs comme le MTBE, le TAME ou l'éthyl *tertio*-butyl éther, désigné ci-après sous le terme d'ETBE, entraine des volumes importants stockés et transportés, en mélange dans les essences notamment. Il est donc nécessaire de connaître le devenir de ces composés en cas de déversement accidentel conduisant à une pollution des sols et des eaux souterraines ou de surface. Le MTBE est un éther produit par condensation du méthanol sur l'isobutène, le TAME est un éther produit par condensation du méthanol sur l'isopentène et l'ETBE est un éther produit par condensation de l'éthanol sur l'isobutène. La structure de ces composés, qui comportent une liaison éther ainsi qu'un carbone tertiaire, est de nature à les rendre très résistants à la biodégradation par les microorganismes présents dans l'environnement.

La littérature relative à la biodégradation de ces différents éthers utilisés comme additifs dans les essences indique que le métabolisme de ces composés nécessite dans la plupart des cas la mise en oeuvre de bactéries ou de cultures mixtes préalablement sélectionnées car leur présence dans l'environnement n'est pas commune (J.P. Salanitro et al., Demonstration of the enhanced MTBE bioremediation (EMB) in situ process, In Situ and On-Site Bioremediation, 19-22 Avril 1999, San Diego, Ca.).
La Demanderesse a préalablement isolé une bactérie Gordonia terrae (ex-Gordona terrae) CIP I-1889 qui s'est avérée capable de pousser en utilisant partiellement l'ETBE comme source de carbone et d'énergie, l'ETBE étant dégradé jusqu'au stade de l'alcool *tertio*butylique (TBA) qui peut ensuite être utilisé comme source de carbone et d'énergie par une autre bactérie Burkholderia cepacia (ex-Pseudomonas cepacia) CIP I-2052 également isolée par la Demanderesse (demande de brevet FR 2 766 478) ou par une bactérie Alcaligenes sp. CIP I-2561 ou une bactérie Mycobacterium sp. CIP I-2562 également isolées par la Demanderesse. Il a été trouvé que la bactérie G. terrae CIP I-1889, qui n'est pas capable de dégrader le MTBE ou le TAME en les utilisant comme source de carbone et d'énergie, est capable de dégrader ces composés par co-métabolisme lorsqu'elle est cultivée en présence d'un substrat de croissance adéquat comme par exemple l'ETBE ou l'éthanol (demande de brevet FR2 787 783). Si la bactérie G. terrae CIP I-1889 est cultivée sur éthanol et en présence de MTBE et/ou de TAME en culture mixte avec la bactérie B. cepacia CIP I-2052, le MTBE et le TAME sont dégradés respectivement en TBA et en alcool *tert*-amylique (TAA) qui peuvent être ensuite utilisés comme source de carbone et d'énergie par B.cepacia CIP I-2052 (demande de brevet FR 2 787 783) ou par la. bactérie Alcaligenes sp. CIP I-2561 ou la bactérie Mycobacterium sp. CIP I-2562
Cependant, la bactérie G. terrae CIP I-1889 a l'inconvénient de présenter une phase de latence dans sa croissance.

Un des objets de l'invention est de remédier aux inconvénients de l'art antérieur.

Un autre objet est de décrire un procédé aérobie qui met en oeuvre cette nouvelle bactérie pour le traitement des eaux polluées dans le but de dégrader le MTBE, l'ETBE ou le TAME contenus en solutions et plus généralement en composés contenant au moins un groupement alcoxy et en particulier un groupement tertioalcoxy. Ce faisant, les concentrations résiduelles en éther dans des eaux résiduaires urbaines ou industrielles ou des nappes aquifères contaminées par ces produits ou par des carburants pouvant contenir ces produits oxygénés sont abaissées significativement.

De manière plus détaillée, l'invention concerne un procédé de traitement d'effluents aqueux contenant au moins un éther, de préférence de l'éthyl *tertio*-butyl éther (ETBE) et/ou du méthyl *tertio*-butyl éther (MTBE) et/ou du *tertio*-amyl méthyl éther (TAME) afin de réduire la concentration dudit éther, caractérisé en ce qu'on fait croître en conditions aérobies au moins une bactérie Gordonia terrae CIP I-2194 en présence d'un substrat de croissance et on fait dégrader l'éther contenu dans les effluents en présence dudit substrat par la biomasse desdites bactéries ainsi produites.

Selon une caractéristique du procédé, lorsque les effluents aqueux contiennent essentiellement du MTBE, on peut faire dégrader avantageusement le MTBE contenu dans les effluents en y introduisant en outre, de façon conjointe ou dissociée au moins une bactérie choisie dans le groupe formé par Burkholderia cepacia CIP I-2052, Alcaligenes sp. CIP I-2561, Mycobacterium sp. CIP I-2562, Arthrobacter globiformis ATCC 53596, Bacillus coagulans ATCC 53595, Pseudomonas stutzeri ATCC 53602 et Mycobacterium vaccae JOB5 ATCC 29678.
Dans ce type de mise en oeuvre, le groupement *tertio*-butyl éther est dégradé en *tertio*-butyl alcool (TBA) et la dégradation sensiblement totale du TBA en dioxyde de carbone et en eau est réalisée par l'adjonction des bactéries mentionnées qui ont la capacité de pousser sur le TBA ainsi produit. Ces souches, G. terrae CIP I-2194, B. cepacia CIP I-2052, Alcaligenes sp. CIP I-2561 et Mycobacterium sp. CIP I-2562 ont été déposées par la Demanderesse à l'Institut Pasteur (CNCM, 25 rue du Docteur-Roux, F-75724 PARIS CEDEX ). Toute autre bactérie susceptible de croître sur le TBA peut entrer dans le cadre de la présente invention.

Selon une autre caractéristique du procédé, lorsque les effluents contiennent essentiellement du TAME, on peut dégrader le TAME contenu dans les effluents en y introduisant en outre, de façon conjointe ou dissociée une bactérie B. cepacia CIP I-2052 ou une bactérie Alcaligenes sp. CIP I-2561 ou une bactérie Mycobacterium SP. CIP I-2562 qui ont la capacité de pousser aussi sur l'alcool *tertio*-amylique (TAA) produit de dégradation du TAME et de le dégrader sensiblement totalement en dioxyde de carbone et en eau. Toute autre bactérie susceptible de croître sur le TAA peut entrer dans le cadre de la présente invention.

Selon une autre caractéristique permettant d'améliorer la croissance de la bactérie B.cepacia CIP I-2052 ou de la bactérie Alcaligenes sp. CIP I-2561 ou de la bactérie Mycobacterium sp. CIP I-2562, on peut la faire croître en présence de TBA et/ou de TAA et d'au moins un sel de cobalt, de préférence le chlorure de cobalt. Dans ces conditions, la concentration de TBA et/ou de TAA peut être comprise entre 0,01 et 10 g/L d'effluents et celle du sel de cobalt entre 0,01 et 4 mg/L.

Selon une caractéristique de l'invention, la bactérie G. terrae CIP I-2194 sélectionnée à partir de G. terrae CIP I-1889 est en général ensemencée sur un substrat de croissance qui peut être, par exemple, au moins un composé choisi dans le groupe formé par l'éthanol, l'isopropanol, le n-butanol, le n-pentanol, un monosaccharide, un disaccharide, le dibutyléther, l'éthylbutyléther, l'éthyl *tertio*-butyl éther, l'acétone, l'éthylène glycol, le glycérol et la tryptone.
D'autres substrats de croissance à base de carbone et d'hydrogène peuvent être apportés. Chaque bactérie peut croître différemment en présence d'un type donné de substrat.

On a obtenu d'excellents résultats en utilisant comme substrat de croissance de l'éthanol et/ou de l'acétone.
Ce substrat de croissance particulier peut être introduit à une concentration qui n'excède pas le seuil de toxicité de ce substrat pour la bactérie considérée, par exemple à une concentration au moins égale à celle de l'éther à dégrader et comprise avantageusement entre 0,1 mg/L et 5 500 mg/L d'effluents.
Ainsi, on a constaté que lorsque la bactérie selon l'invention est cultivée en présence d'un substrat de croissance qui est l'ETBE, c'est-à-dire d'un effluent aqueux le contenant et que l'on veut traiter, elle ne présente aucune phase de latence dans la croissance, contrairement à ce qu'on observait lors de la mise en oeuvre de G. terrae CIP I-1889.

Lorsqu'il s'agit de dégrader le MTBE et/ou le TAME contenu dans les effluents aqueux à dépolluer, on a constaté que la bactérie selon l'invention s'avérait capable d'initier la dégradation de ces éthers, même en absence de substrat de croissance. Cependant, il est préférable d'utiliser un substrat de croissance tel que décrit ci-avant et, par exemple, l'éthanol ou l'isopropanol.

Cette bactérie G. terrae CIP I-2194 est dite constitutive pour la dégradation des éthers, c'est-à-dire que les enzymes responsables de l'attaque initiale sur les éthers sont produites de façon constitutive et ne nécessitent pas une induction préalable pour être mises en oeuvre. Une telle souche qui croît en présence d'un substrat de croissance tel que l'éthanol sera avantageusement associée dans le cadre d'une culture mixte, pour dégrader les éthers ETBE, MTBE et/ou TAME à la bactérie B. cepacia CIP I-2052 ou à la bactérie Alcaligenes sp. CIP I-2561 ou à la bactérie Mycobacterium sp. CIP I-2562 que l'on fait croître en présence de sel de cobalt. Dans ces conditions, la dégradation de l'éther commence immédiatement et le TBA et/ou le TAA en résultant est dégradé à son tour de manière sensiblement totale et très rapidement.
Les bactéries peuvent tolérer une large gamme de concentrations en éther. De préférence, on peut dégrader des effluents aqueux contenant une concentration en éther et, en particulier, en MTBE ou en TAME ou en ETBE au plus égale à 5 000 mg/L et plus particulièrement comprise entre 0,01 mg/L et 400 mg/L. Il est néanmoins toujours possible de diluer l'effluent pour opérer dans des conditions optimales, compatibles avec les capacités de dégradation des souches bactériennes.

Dans le cas où les effluents aqueux contiennent de l'éthyl *tertio*-butyl éther (ETBE) comme contaminant, cet ETBE peut être utilisé au moins en partie comme substrat de croissance et donc comme source d'énergie.

Le procédé découlant de la mise en oeuvre de ces bactéries est applicable pour traiter notamment des effluents pollués par du MTBE, du TAME et/ou de l'ETBE, de manière à ce que les concentrations en MTBE ou en TAME ou en ETBE dans les rejets soient compatibles avec les normes en vigueur.

Le substrat de croissance peut être apporté de manière continue ou discontinue à une concentration telle qu'elle puisse assurer la fourniture d'énergie nécessaire à la biodégradation, par exemple à une concentration au moins égale à celle de l'éther à dégrader.

La mise en oeuvre de ces bactéries pour le traitement d'effluents pollués par du MTBE, de l'ETBE ou du TAME peut être réalisée de la manière suivante : par exemple dans un biofiltre où les bactéries sont fixées sur un support minéral ou organique ou bien elles peuvent être ajoutées comme inoculum à des boues de station d'épuration.
Ces bactéries peuvent être également utilisées pour le traitement in situ d'aquifères pollués en les injectant comme inoculum avec un substrat de croissance approprié dans des puits forés dans l'aquifère.
Quand on fait développer lesdites bactéries sur un système de biofiltre de volume adéquat, on peut introduire les effluents contenant l'éther, en particulier le MTBE, l'ETBE et/ou le TAME en présence d'air ou d'oxygène dans le biofiltre à un débit d'alimentation adéquat de 0,05 L/L à 5 L/L, par exemple de 0,1 à 2 L/L de biofiltre/heure selon la concentration en contaminant à traiter et on soutire l'effluent débarrassé au moins en partie de l'éther contaminant.

L'invention sera mieux comprise au vu des exemples suivants et des figures parmi lesquelles :
- la figure 1 montre la capacité de dégradation du MTBE d'une culture de Gordonia terrae CIP I-2194 en présence d'éthanol,
- la figure 2 illustre la capacité de dégradation du TAME d'une culture de Gordonia terrae CIP I-2194 en présence d'éthanol,
- la figure 3 montre la concentration résiduelle (CR) en substrat qui est l'éthanol et en MTBE en fonction du temps, et
- la figure 4 représente la densité optique (DO_{600 nm}) exprimant la croissance des microorganismes en fonction du temps pour une culture mixte de G . terrae CIP I-2194 et B.cepacia CIP I-2052.

### EXEMPLE 1 (comparatif)

### Isolement d'une nouvelle souche Gordonia terrae CIP I-2194 et comparaison de sa croissance avec la croissance de Gordonia terrae CIP I-1889 en présence d'ETBE

La bactérie Gordonia terrae CIP I-1889 est capable de croissance sur l'ETBE (Brevet FR 2 766 478) qu'elle utilise comme source de carbone et d'énergie en aboutissant à l'accumulation de *tert*-butanol (TBA). Cette bactérie a été cultivée par repiquages successifs à plusieurs reprises sur le milieu minimum MM1 contenant de l'ETBE comme source de carbone et d'énergie et dont la composition est la suivante :
- KH₂PO₄ 6,8g
- K₂HPO₄ 8,7g
- Na₂HPO₄,2H₂O 0,334g
- NH₄Cl 1,5g
- CaCl₂,2H₂O 0,0364g
- FeCl₃,6H₂O 0,0012g
- Solution de vitamines 1 mL
- H₂O q.s.p.1 litre
pH=6,95

La solution de vitamines a la composition suivante pour 1 litre d'eau distillée :
- Biotine 200 mg
- Riboflavine 50 mg
- Acide nicotinamique 50 mg
- Panthoténate 50 mg
- Acide p-aminobenzoïque 50 mg
- Acide folique 20 mg
- Thiamine 15 mg
- Cyanocobalamine 1,5 mg
A ce milieu , on rajoute donc de l'ETBE à une concentration élevée, c'est-à-dire entre 300 et 500 mg/L.
À l'issue de ces différents repiquages, une nouvelle bactérie qui est issue de la bactérie Gordonia terrae CIP I-1889 a été obtenue. Elle présente des caractères morphologiques et conventionnels identiques à ceux de la souche-mère. Elle a été déposée à la collection de l'Institut Pasteur, Paris-France comme Gordonia terrae CIP I-2194. Cette souche nouvelle est constitutive pour l'expression des gènes qui permettent la dégradation de l'ETBE, c'est-à-dire que la dégradation de l'ETBE se fait sans qu'il soit besoin d'une mise en contact préalable de la souche avec l'ETBE. La bactérie-mère G. terrae CIP I-1889 est dite inductible pour la dégradation de l'ETBE (ETBE⁺ᵢ) et la nouvelle souche G. terrae CIP I-2194 est dite constitutive pour la dégradation de l'ETBE (ETBE⁺_{c}) :
A titre comparatif, la bactérie G. terrae CIP I-1889 d'une part et la bactérie G. terrae CIP I-2194 d'autre part sont cultivées séparément dans une fiole de milieu MM1 décrit ci-dessus et auquel on rajoute de l'ETBE comme source de carbone et d'énergie (substrat de croissance) à une concentration finale de l'ordre de 1 g/L.
Les cultures sont incubées à 30°C.
Les concentrations résiduelles en ETBE sont déterminées sur des échantillons prélevés sur chacune des cultures et injectés sur un chromatographe en phase gazeuse équipé d'un intégrateur calculant les concentrations résiduelles en ETBE et en TBA produit par intégration des différents pics obtenus sur les chromatogrammes. Les résultats obtenus sont présentés dans le tableau n°1.

**Tableau n°1 :**

| **Comparaison de la croissance en présence d'ETBE des bactéries G.terrae CIP I-1889 et CIP I-2194** | | | | | | |
|---|---|---|---|---|---|---|
| Souche testée | Concentration initiale en ETBE (mg/L) | Concentration finale en TBA (mg/L) | Phase de latence observée avant dégradation de l'ETBE (heures) | Biomasse produite (mg/L) | Durée du test (heures) | % ETBE dégradé |
| G. terrae CIP I-1889 | 985 | 714 | 94,5 | 206 | 190 | 100% |
| G.terrae CIP I-2194 | 873 | 633 | 0 | 250 | 78 | 100% |

Ainsi qu'on le voit dans cette expérimentation, aucune phase de latence (délai) n'est observé avec la souche G. terrae CIP I-2194 pour la dégradation de l'ETBE. Ceci est considéré comme un avantage pour la mise en oeuvre des souches par l'Homme de l'Art.

### EXEMPLE 2

### Dégradation du MTBE et du TAME par Gordonia terrae CIP I-2194

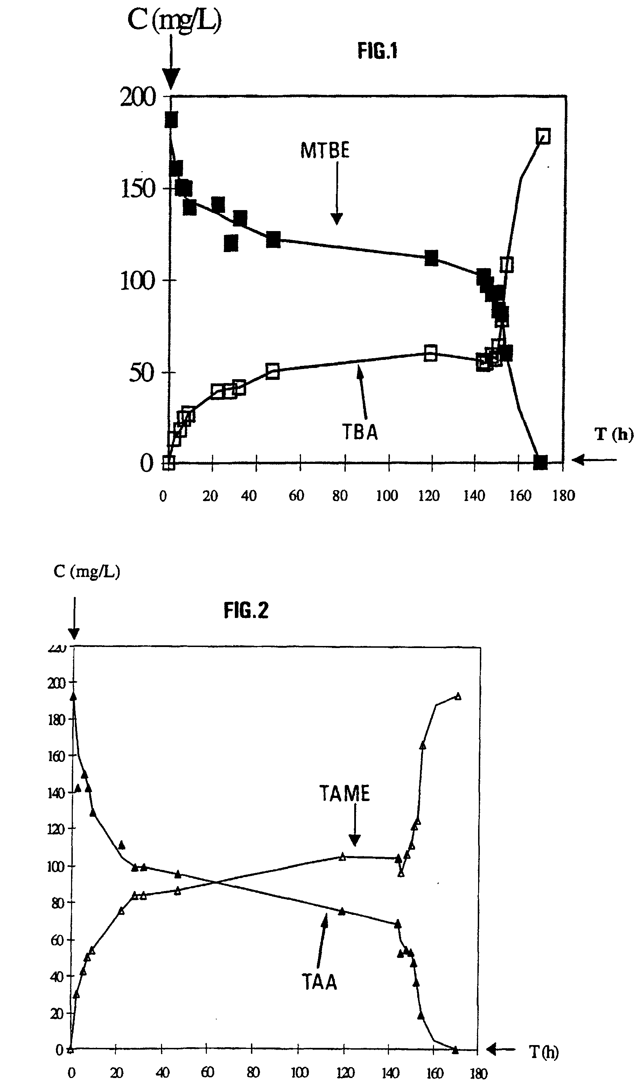

La capacité de la bactérie G. terrae CIP I-2194 à dégrader le MTBE et le TAME a été étudiée.
La bactérie G. terrae CIP I-2194 est ensemencée dans des fioles du milieu minéral MM1 décrit dans l'exemple 1 et contenant comme source de carbone soit du MTBE soit du TAME à une concentration de l'ordre de 200 mg/L.
Les cultures sont incubées à 30°C.
Des prélèvements sont effectués à intervalle régulier sur ces cultures afin de déterminer par chromatographie en phase gazeuse les teneurs résiduelles en MTBE ou en TAME.
Les résultats sont présentés dans les figures 1 et 2.
Comme on le voit sur ces figures, dès l'ensemencement, la bactérie G.terrae CIP I-2194 est capable de dégrader le MTBE et le TAME. Cette baisse de concentration de chacun des éthers est corrélée à l'apparition concommitante de l'alcool correspondant, c'est-à-dire le TBA dans le cas du MTBE et l'alcool *tertio*-amylique (TAA) dans le cas du TAME. On voit néanmoins que si cette dégradation se produit sans phase de latence, elle n'est pas totale et s'arrête après 40 à 60 heures d'incubation.
Si on ajoute alors de l'éthanol à la culture (après 150 heures environ sur les figures), la dégradation du MTBE ou du TAME par G. terrae CIP I-2194 reprend alors et est totale en une trentaine d'heures.
Cette expérimentation confirme bien que le comportement de la bactérie G. terrae CIP I-2194 est différent de celui de la bactérie-mère G. terrae CIP I-1889, puisque celle-ci n'était pas capable d'initier la dégradation du MTBE ou du TAME en absence d'un substrat de croissance (Exemple 2 du brevet FR-A-2 787 783). La bactérie G. terrae CIP I-2194 étant constitutive pour les enzymes responsables de l'attaque de la liaison éther, elle est capable d'initier la dégradation du MTBE ou du TAME bien que ces composés ne constituent pas une source de carbone et d'énergie, néanmoins cette dégradation n'est que partielle car des limitations doivent intervenir rapidement dans les bactéries. L'addition d'éthanol qui est substrat de croissance permet alors de terminer la dégradation du MTBE ou du TAME par cométabolisme comme cela était décrit pour la bactérie G. terrae CIP I-1889.
Cette capacité à initier la dégradation du MTBE ou du TAME en absence de substrat de croissance constitue un avantage de la bactérie G. terrae CIP I-2194 par rapport à la bactérie-mère G. terrae CIP I-1889.

### EXEMPLE 3

### Dégradation du MTBE par une culture mixte de Gordonia terrae CIP I-2194 et de Burkholderia cepacia CIP I-2052 en présence de chlorure de cobalt

On a étudié la dégradation du MTBE par une culture mixte contenant G. terrae CIP I-2194 et B. cepacia CIP I-2052 en fermenteur. Une préculture de G. terrae CIP I-2194 a été effectuée sur 200 mL de milieu Luria. Une préculture de B. cepacia CIP I-2052 a été effectuée sur 200 mL de milieu MM2 dont la composition est la suivante :
- KH₂PO₄ 1,4 g
- K₂HPO₄ 1,7 g
- NaNO₃ 1,5 g
- MgSO₄, 7H₂O 0,5g
- CaCl₂, 2H₂O 0,04 g
- FeCl₃, 6H₂O 0,012 g
- Solution de vitamines 1 mL
- H₂O q.s.p.1 litre

La solution de vitamines a la composition suivante pour 1 litre d'eau distillée :
- Biotine 200 mg
- Riboflavine 50 mg
- Acide nicotinamique 50 mg
- Panthoténate 50 mg
- Acide p-aminobenzoïque 50 mg
- Acide folique 20 mg
- Thiamine 15 mg
- Cyanocobalamine 1,5 mg
et contenant du glucose à une concentration de 500 mg/L et auquel on a additionné à raison de 10 mL/L de milieu MM2, une solution d'oligoéléments contenant un sel de cobalt qui permet une meilleure croissance de la bactérie. Cette solution d'oligoéléments a la composition suivante :
- Acide nitrilotriacétique 1,5 g
- Fe(NH₄)₂(SO₄)₂, 6 H₂O 0,2 g
- Na₂SeO₃ 0,2 g
- CoCl₂, 6 H₂O 0,1 g
- MnSO₄, 2H₂O 0,1 g
- Na₂MoO₄, 2H₂O 0,1 g
- ZnSO₄, 7 H₂O 0,1 g
- AlCl₃, 6H₂O 0,04 g
- NiCl₂, 6 H₂O 0,025 g
- H₃BO₃ 0,01 g
- CuSO₄, 5 H₂O 0,01 g
q.s.p. 1 litre d'eau distillée.

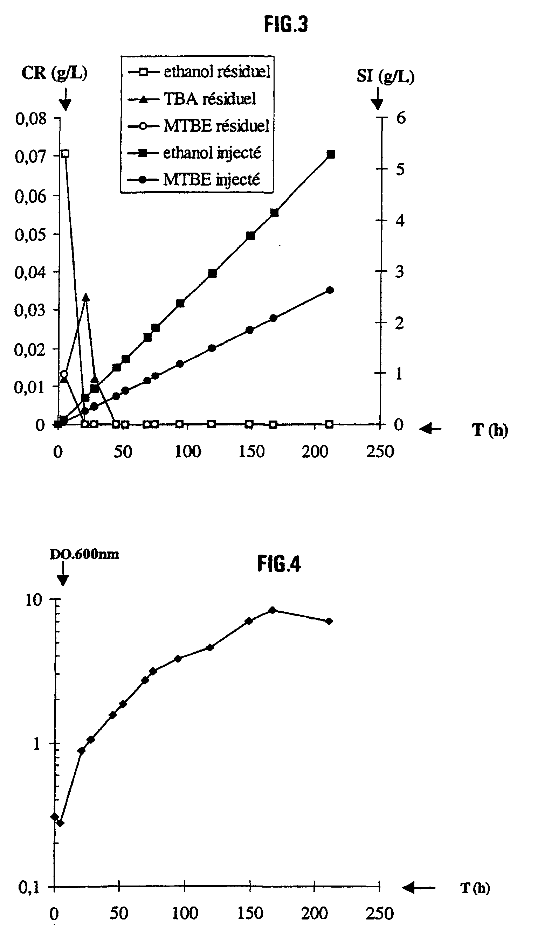

Ces précultures sont utilisées pour ensemencer 4L de milieu MM2 décrit ci-dessus et auquel on a ajouté, à raison de 10 mL/L de milieu de culture, la solution d'oligoéléments contenant le sel de cobalt décrite ci-dessus. Dans ces conditions, les deux souches sont à des concentrations cellulaires après ensemencement de l'ordre de 10⁸ u.f.c./mL pour G. terrae CIP I-2194 et 10⁷ u.f.c./mL pour B. cepacia CIP I-2052. Le fermenteur est alimenté en mode fed-batch, c'est-à-dire sans soutirage. L'alimentation contient un mélange du substrat, l'éthanol à 100 g/L comme source de carbone et d'énergie et de co-substrat à dégrader, le MTBE à 50 g/L. La vitesse d'alimentation est fixée à 1 mL/h. La température du fermenteur était fixée à 30°C. L'agitation était de 900 tours/min avec une aération de 12,5 L/L/h.
Des prélèvements sont réalisés sur le milieu de culture et les concentrations résiduelles en éthanol, MTBE et TBA sont déterminées après filtration par dosage en CPG. Dans le même temps, on effectue à intervalles réguliers des numérations de chacune des deux souches G. terrae CIP I-2194 et B. cepacia CIP I-2052, par étalement sur boites de milieu Luria et sur boites de milieu MM2 gélosé contenant du TBA à raison de 500 mg/L. Les résultats de ces expérimentations sont présentés sur les figures 3 et 4. L'éthanol fourni est rapidement utilisé par la bactérie G. terrae CIP I-2194 et dans le même temps, le MTBE est également dégradé en TBA sans qu'il apparaisse de phase de latence dans l'utilisation à la fois du substrat, l'éthanol et du co-substrat, le MTBE. Le TBA ainsi formé s'accumule à une concentration ne dépassant pas 30 mg/L puis est rapidement reconsommé par la bactérie B. cepacia CIP I-2052. À partir de 40 heures, les concentrations résiduelles en éthanol, MTBE et TBA sont nulles. Les populations respectives des deux souches augmentent jusqu'à 80 heures de culture puis se stabilisent du fait de la limitation en substrat (éthanol ou TBA). Au cours de cette expérimentation qui a duré 210 heures, 2,4 g de MTBE injectés ont été dégradés ainsi que 5,2 g d'éthanol. La quantité de TBA formé à partir du MTBE est de 2 g, ces 2g ont également été totalement dégradés.

### EXEMPLE 4

### Dégradation du MTBE par deux types de cultures mixtes : 1) Gordonia terrae CIP I-2194 et de Alcaligenes sp.CIP I-2561 ou 2) Gordonia terrae CIP I-2194 et de Mycobacterium sp.CIP I-2562, en présence d'éthanol ou d'isopropanol.

On réalise 3 précultures différentes :
- une préculture de G. terrae CIP I-2194 sur le milieu MM2 décrit dans l'exemple 3 et contenant de l'ETBE à 500 mg/L comme source de carbone.
- une préculture de Alcaligenes sp. CIP I-2561 sur le milieu MM2 contenant du TBA à 1 g/L comme source de carbone.
- une préculture de Mycobacterium sp. CIP I-2562 sur le milieu MM2 contenant du TBA à 1 g/L comme source de carbone.
Après une croissance de 48 heures à 30°C sous agitation, ces différentes précultures sont centrifugées afin de recueillir le culot bactérien de chaque souche. Chaque culot est lavé avec du milieu MM2 puis récolté par centrifugation.
Le culot de G. terrae CIP I-2194 est repris dans 4,5 mL de milieu MM2, le culot de Alcaligenes sp. CIP I-2561 ainsi que le culot de Mycobacterium sp. CIP I-2562 sont repris chacun dans 20 mL.
Les densités optiques à 600 nm (D.O._{600 nm}) de ces suspensions ont pu être mesurées pour G. terrae CIP I-2194 et Mycobacterium sp. CIP I-2562 et elles sont de 7,32 et 2,72, respectivement. La D.O._{600 nm} n'a pas pu être mesurée pour Alcaligenes sp. CIP I-2561 car cette souche forme des floculats.
Ces suspensions cellulaires ont été utilisées pour ensemencer des fioles de milieu MM2 (50 mL) contenant soit de l'isopropanol (300 mg/L final) et du MTBE (100 mg/L final), soit de l'éthanol (300 mg/L final) et du MTBE (100 mg/L final). Les suspensions sont utilisées à raison de 1 mL pour la souche G. terrae CIP I-2194 et de 0,5 mL de l'une ou l'autre des suspensions pour Alcaligenes sp. CIP I-2561 et Mycobacterium sp. CIP I-2562.

Des essais témoins non ensemencés constitués par des fioles de milieu MM2 contenant de l'isopropanol et du MTBE ou de l'éthanol et du MTBE sont réalisés dans les mêmes conditions. Les fioles sont incubées sous agitation à 30°C pendant 72 heures.
La D.O._{600 nm} initiale a pu être calculée dans le cas des cultures mixtes de G. terrae CIP I-2194 et Mycobacterium sp. CIP I-2562, elle est d'environ 0,17.
Après 72 heures, des échantillons de chaque culture ainsi que des témoins sont prélevés, filtrés (0,22 µm) et dosés en CPG pour déterminer les substrats résiduels. Les résultats sont présentés dans le Tableau n°2.

**Tableau n°2 :**

| **Teneurs résiduelles en MTBE et éthanol ou isopropanol des cultures mixtes de G. terrae CIP 1-2194 avec Alcaligenes sp. CIP 1-2561 ou Mycobacterium sp. CIP I-2562** | | | | | |
|---|---|---|---|---|---|
| Culture mixte mise en oeuvre | Teneur finale en MTBE | Teneur finale en TBA | Teneur finale en éthanol | Teneur finale en isopropanol | D.O._{600 nm} finale |
| G. terrae CIP I-2194 /Alcaligenes sp. CIP I-2561 (éthanol+MTBE) | 0 | 0 | 0 | - | n.d.* |
| G. terrae CIP I-2194 /Alcaligenes sp. CIP I-2561 (isopropanol+MTBE) | 0 | 0 | - | 0 | n.d.* |
| G. terrae CIP I-2194 /Mycobacterium sp. CIP I-2562 (éthanol+MTBE) | 0 | 0 | 0 | - | 0,41 |
| G. terrae CIP I-2194 /Mycobacterium sp. CIP I-2562 (isopropanol+MTBE) | 0 | 3,3 mg/L | - | 0 | 0,44 |

| | | | | | |
|---|---|---|---|---|---|
| *n.d. : non déterminé | | | | | |

On a vérifié que dans les témoins, ni le MTBE ni l'éthanol ou l'isopropanol en mélange ne sont dégradés.
Comme on le voit d'après les résultats de cette expérimentation, le MTBE est totalement dégradé en présence d'isopropanol ou d'éthanol par G. terrae CIP I-2194. Le TBA formé au cours de cette dégradation est ensuite utilisé par Alcaligenes sp. CIP I-2561 ou par Mycobacterium sp. CIP I-2562 comme source de carbone et d'énergie. L'éthanol ou l'isopropanol sont entièrement utilisés.
Une deuxième addition de MTBE et de substrat, éthanol ou isopropanol, en même quantité que lors de la première addition, a été effectuée et les fioles ont été à nouveau incubées.

Les dosages ont été réalisés après 24 heures puis après 48 heures d'incubation.
Après 24 heures d'incubation ; il n'y avait plus de MTBE, d'éthanol ou d'isopropanol dans aucune des fioles. Il n'y avait, également, plus de TBA résiduel dans les fioles des cultures mixtes G. terrae CIP I-2194/Alcaligenes sp. CIP I-2561. Par contre, il restait du TBA résiduel dans les cultures mixtes de G. terrae CIP I-2194/ Mycobacterium sp. CIP I-2562, mais après 48 heures d'incubation il n'y avait plus de TBA résiduel dans ces cultures mixtes.
La dégradation complète d'une deuxième addition de MTBE/éthanol ou de MTBE/isopropanol confirme bien la capacité de dégradation des différentes cultures mixtes testées.

## Revendications

1. Procédé de traitement d'effluents aqueux contenant de l'éthyl *tertio*-butyl éther (ETBE) et/ou du méthyl *tertio*-butyléther (MTBE) et/ou du *tertio*-amylméthyléther (TAME) afin de réduire la concentration en ETBE et/ou en MTBE et/ou en TAME **caractérisé en ce qu'**on fait croître en conditions aérobies au moins une bactérie Gordonia terrae CIP I-2194 en présence d'un substrat de croissance et on fait dégrader l'ETBE et/ou le MTBE et/ou le TAME contenus dans les effluents en présence dudit substrat par la biomasse desdites bactéries ainsi produites.

2. Procédé selon la revendication 1, dans lequel les effluents aqueux contiennent essentiellement du MTBE et dans lequel on fait dégrader le MTBE contenu dans les effluents en y introduisant de façon conjointe ou dissociée au moins une bactérie choisie dans le groupe formé par Burkholderia cepacia CIP I-2052, Alcaligenes sp. CIP I-2561, Mycobacterium sp. CIP I-2562, Arthrobacter globiformis ATCC 53596, Bacillus coagulans ATCC 53595, Pseudomonas stutzeri ATCC 53602 et Mycobacterium vaccae JOB5 ATCC 29678.

3. Procédé selon la revendication 1, dans lequel les effluents aqueux contiennent essentiellement du TAME et dans lequel on fait dégrader le TAME contenu dans les effluents en y introduisant de façon conjointe ou dissociée une bactérie Burkholderia cepacia CIP I-2052 ou Alcaligenes sp. CIP I-2561 ou Mycobacterium sp. CIP I-2562,

4. Procédé selon l'une des revendications 1 à 3, dans lequel la bactérie Gordonia terrae CIP I-2194 est sélectionnée à partir d'une bactérie G.terrae CIP I-1889.

5. Procédé selon l'une des revendications 2 à 4 dans lequel on fait croître la bactérie Burkholderia cepacia CIP I-2052 ou Alcaligenes sp. CIP I-2561 ou Mycobacterium sp. CIP I-2562, en présence d'alcool tertiobutylique et/ou tertioamylique, et d'au moins un sel de cobalt, de préférence le chlorure de cobalt.

6. Procédé selon la revendication 5, dans lequel la concentration de l'alcool tertiobutylique et/ou tertioamylique est comprise entre 0,01 et 10 g/L d'effluents et celle du sel de cobalt à une concentration comprise entre 0,01 et 4 mg/L.

7. Procédé selon l'une des revendications 1 à 6 dans lequel lequel le substrat de croissance est au moins un composé choisi dans le groupe formé par l'éthanol, l'isopropanol, le n-butanol, le n-pentanol, un monosaccharide, un disaccharide, le dibutyléther, l'éthylbutyléther, l'éthyl *tertio*-butyléther, l'acétone, l'éthylène glycol, le diéthylène glycol, le glycérol et la tryptone, de préférence de l'éthanol et/ou de l'acétone, à une concentration au moins égale à celle de l'éther à dégrader.

8. Procédé selon l'une des revendications 1 à 7, dans lequel la concentration en MTBE, en ETBE et en TAME de l'effluent est au plus égale à 5 g/L, et de préférence comprise entre 0,01 mg/L et 400 mg/L.

9. Procédé selon l'une des revendications 1 à 8, dans lequel on fait développer lesdites bactéries sur un système de biofiltre de volume adéquat, on introduit les effluents contenant le MTBE et/ou le TAME en présence d'air ou d'oxygène dans le biofiltre à un débit d'alimentation de 0,1 à 2 L/L de biofiltre/heure et on soutire l'effluent débarrassé au moins en partie du MTBE et/ou du TAME.

10. Procédé selon l'une des revendications 1 à 8, dans lequel les effluents aqueux sont un aquifère et dans lequel on injecte comme inoculum lesdites bactéries avec le substrat de croissance en présence d'air ou d'oxygène par l'intermédiaire de puits forés dans ledit aquifère.

## Claims

1. Process for the treatment of aqueous effluents containing ethyl *tert*-butyl ether (ETBE) and/or methyl *tert*-butyl ether (MTBE) and/or *tert*-amyl methyl ether (TAME) in order to reduce the concentration of ETBE and/or MTBE and/or TAME **characterized in that** at least one bacterium Gordonia terrae CIP I-2194 is grown under aerobic conditions in the presence of a growth substrate and the ETBE and/or MTBE and/or TAME contained in the effluents is degraded in the presence of said substrate by the biomass of said bacteria thus produced.

2. Process according to claim 1, in which the aqueous effluents essentially contain MTBE and in which the MTBE contained in the effluents is degraded by introducing into it, in a joint or dissociated fashion, at least one bacterium chosen from the group formed by Burkholderia cepacia CIP I-2052, Alcaligenes sp. CIP I-2561, Mycobacterium sp. CIP I-2562, Arthrobacter globiformis ATCC 53596, Bacillus coagulans ATCC 53595, Pseudomonas stutzeri ATCC 53602 and Mycobacterium vaccae JOB5 ATCC 29678.

3. Process according to claim 1, in which the aqueous effluents essentially contain TAME and in which the TAME contained in the effluents is degraded by introducing into it, in a joint or dissociated fashion, a bacterium Burkholderia cepacia CIP I-2052 or Alcaligenes sp. CIP I-2561 or Mycobacterium sp. CIP I-2562.

4. Process according to one of claims 1 to 3, in which the bacterium Gordonia terrae CIP I-2194 is selected from a bacterium G. terrae CIP I-1889.

5. Process according to one of claims 2 to 4, in which the bacterium Burkholderia cepacia CIP I-2052 or Alcaligenes sp. CIP I-2561 or Mycobacterium sp. CIP I-2562 is grown, in the presence of tert-butyl and/or tert-amyl alcohol and at least one cobalt salt, preferably cobalt chloride.

6. Process according to claim 5, in which the concentration of tert-butyl and/or tert-amyl alcohol is comprised between 0.01 and 10 g/L of effluents and that of the cobalt salt between 0.01 and 4 mg/L.

7. Process according to one of claims 1 to 6, in which the growth substrate is at least one compound chosen from the group formed by ethanol, isopropanol, n-butanol, n-pentanol, a monosaccharide, a disaccharide, dibutyl ether, ethyl butyl ether, ethyl *tert*-butyl ether, acetone, ethylene glycol, diethylene glycol, glycerol and tryptone, preferably ethanol and/or acetone, at a concentration at least equal to that of the ether to be degraded.

8. Process according to one of claims 1 to 7, in which the MTBE, ETBE and TAME concentration of the effluent is at most equal to 5 g/L, and preferably comprised between 0.01 mg/L and 400 mg/L.

9. Process according to one of claims 1 to 8, in which said bacteria are developed on a biofilter system of appropriate volume, the effluents containing the ether, in particular, MTBE, ETBE and/or TAME, are introduced into the biofilter in the presence of air or oxygen at a suitable feed rate of 0.1 to 2 UL biofilter/hour and the effluent rid at least in part of the MTBE and/or TAME is drawn off.

10. Process according to one of claims 1 to 8, in which the aqueous effluents are an aquifer and into which said bacteria are injected as inoculum with the growth substrate, in the presence of air or oxygen, via shafts drilled in said aquifer.

## Patentansprüche

1. Verfahren zur Behandlung von wässrigen abströmen, die Ethyl-tert.-Butylether (ETBE) und/oder Methyl-tert.-Butylether (MTBE) und/oder tert.-Amylmethylether (TAME) enthalten, um die Konzentration an ETBE und/oder an MTBE und/oder an TAME zu vermindern, **dadurch gekennzeichnet, dass** man bei aeroben Bedingungen wenigstens ein *Gordonia terrae* Bakterium, CIP I-2194 in Gegenwart eines Wachstumssubstrats wachsen lässt und den ETBE und/oder den MTBE und/oder den TAME, die in den Abströmen enthalten sind, in Gegenwart des Substrats durch die Biomasse der so erzeugten Bakterien abbauen lässt.

2. Verfahren nach Anspruch 1, bei dem die wässrigen Abströme im wesentlichen MTBE enthalten und bei dem man den in den Abströme enthaltenen MTBE abbauen lässt, indem man dort zusammen oder getrennt wenigstens ein Bakterium einführt, das aus der Gruppe gewählt ist, die gebildet wird durch *Burkholderia cepacia CIP I-2052, Alcaligenes sp.* CIP I-2561, *Mycobacterium sp.* CIP I-2562, *Arthrobacter globiformis* ATCC 53596, *Bacillus* coagulans ATCC 53595, *Pseudomonas stutzeri* ATCC53602 und *Mycobacterium vaccae* JOB5 ATCC 29678.

3. Verfahren nach Anspruch 1, bei dem die wässrigen Abströme im wesentlichen TAME enthalten und bei dem man den TAME, der in den Abströmen enthalten ist, abbauen lässt, indem man dort zusammen oder getrennt wenigstens ein *Burkholderia cepacia Bakterium CIP I-2052, Alcaligenes sp.* Bakterium CIP 1-2561 oder *Mycobacterium sp.* Bakterium CIP I-2562 einführt.

4. Verfahren nach einem der Ansprüche 1 bis 3, bei dem das *Gordonia terrae* Bakterium, CIP I-2194 aus einem *G.terrae* Bakterium CIP I-1889 ausgewählt wird.

5. Verfahren nach einem der Ansprüche 2 bis 4, bei dem man das *Burkholderia cepacia* Bakterium *CIP I-2052, Alcaligenes sp.* Bakterium CIP I-2561 oder *Mycobacterium sp.* Bakterium CIP I-2562 in Gegenwart eines tert.-Buthylalkohols und/oder eines tert.-Amylalkohols und wenigstens einem Kobaltsalz, vorzugsweise Kobaltchlorid wachsen lässt.

6. Verfahren nach Anspruch 5, bei dem die Konzentration von tert.-Butylalkohol und/oder tert.-Amylalkohol zwischen 0,01 und 10 g/l Abströme und jene des Kobaltsalzes bei einer Konzentration zwischen 0,01 und 4 mg/l liegt.

7. Verfahren nach einem der Ansprüche 1 bis 6, bei dem das Wachstumssubstrat wenigstens eine Verbindung gewählt aus der durch Ethanol, Isopropanol, n-Butanol, n-Pentanol, einem Monosaccharid, einem Disaccharid, Dibutylether, Ehtylbutylether, Ethyl-tert.-Butylether, Aceton, Ethylenglycol, Diethylenglycol, Glycerol und Trypton, vorzugsweise Ethanol und/oder Aceton gebildeten Gruppe bei einer Konzentration ist, die wenigstens gleich jener des abzubauenden Ethers ist.

8. Verfahren nach einem der Ansprüche 1 bis 7, bei dem die Konzentration an MTBE, an ETBE und an TAME des Abstroms höchstens gleich 5 g/l und vorzugsweise zwischen 0,01 und 400 mg/l ist.

9. Verfahren nach einem der Ansprüche 1 bis 8, bei dem man die Bakterien auf einem Biofiltersystem mit adäquaten Volumen entwickeln lässt, man die MTBE und TAME enthaltenden Abströme in Gegenwart von Luft oder Sauerstoff in dem Biofilter bei einem Versorgungsdurchsatz von 0,1 bis 2 I/I Biofilter/Stunde einführt und den wenigstens teilweise von wenigstens einem Teil des MTBE und/oder des TAME befreiten Abstrom abzieht.

10. Verfahren nach einem der Ansprüche 1 bis 8, bei dem die wässrigen Abströme eine Wasserschicht sind und bei dem man als Animpfung die Bakterien mit dem Wachstumssubstrat in Gegenwart von Luft oder Sauerstoff mittels Bohrlöchern in die Wasserschicht einspritzt.
